# FASCICULE DE BREVET EUROPEEN

(11) **EP 1 637 399 B1**
(45) Date de publication et mention de la délivrance du brevet: **13.06.2007**
(21) Numéro de dépôt: 05108426.7
(22) Date de dépôt: 14.09.2005
(51) Int. Cl.: B60R 9/04

(54) **Système de galerie pour véhicule automobile, à longeron incorporant des traverses amovibles, et véhicule automobile correspondant.**
Dachgepäckträgeranordnung für Autos mit abnehmbaren Querträgern
Roof rack system for cars incorporating removable traverses

(30) Priorité: 15.09.2004 FR 0409844; 14.10.2004 FR 0410877
(43) Date de publication de la demande: 22.03.2006
(73) Titulaire: WAGON SAS, 79302 Bressuire Cédex (FR)
(72) Inventeur: MARTINEAU, Daniel, 85700, SAINT MESMIN (FR)
(74) Mandataire: Bioret, Ludovic

(56) Documents cités:
- WO-A-91/08929
- US-A- 5 511 709
- US-A1- 2003 080 168
- US-A1- 2003 141 735

## Description

Le domaine de l'invention est celui des véhicules automobiles, et plus précisément du transport d'objets sur les véhicules automobiles. Plus précisément encore, l'invention concerne les galeries pour de tels véhicules.

On connaît depuis longtemps des galeries, permettant de transporter des objets à l'extérieur du véhicule, et notamment sur le pavillon de celui-ci. Dans un premier temps, ces galeries se présentaient sous la forme d'un assemblage fixe définissant une zone de stockage sur le pavillon. Selon les cas, cette galerie était fixe ou amovible.

On a ensuite proposé une version simplifiée, formée de traverses amovibles, qui venaient se fixer aux gouttières du pavillon, ou à des éléments de fixation spécifiques prévus à cet effet. Ces barres de galerie présentaient l'avantage, par rapport aux galeries antérieures, d'être moins encombrantes, une fois démontées, et plus simples à manipuler et à installer.

Une autre amélioration a consisté à équiper certains véhicules, notamment de type monospace ou break, de longerons fixes, s'étendant sensiblement parallèlement à l'axe principal du véhicule. Il est alors plus aisé de fixer des traverses sur ces longerons, en cas de besoin, pour former une galerie.

Cette technique présente cependant toujours certains inconvénients. Tout d'abord, lorsque les traverses ne sont pas montées sur les longerons, il est nécessaire de les stocker à un emplacement spécifique. Il n'est généralement pas prévu de tel emplacement dans le véhicule, ce qui conduit l'utilisateur à les stocker en dehors du véhicule, par exemple dans un garage. Ceci est bien sûr peu pratique, notamment si un besoin inopiné de galerie se présente, alors que le véhicule n'est pas au garage, ou à proximité des barres. Il n'est bien sûr pas souhaitable de laisser ces traverses en permanence sur les véhicules, pour des raisons d'esthétique, d'ergonomie, et surtout de pénétration dans l'air et par conséquent de consommation.

Un autre inconvénient de cette technique est que la fixation des traverses aux longerons est généralement peu aisée, et nécessite parfois un outillage spécifique.

Le document US 5511709 A décrit un système de galerie pour véhicule automobile selon le préambule de revendication 1.

L'invention a notamment pour objectif de pallier ces inconvénients de l'art antérieur.

Plus précisément, l'objectif de l'invention est de fournir un système de galerie permettant d'avoir toujours à disposition les traverses, sans qu'il soit nécessaire de les laisser en place en position de travail (montées transversalement sur les longerons, ou barres fixes).

Un autre objectif de l'invention est de fournir un tel système, ne nécessitant pas de prévoir un emplacement spécifique pour les traverses à l'intérieur du véhicule, par exemple dans le coffre, ce qui conduirait à réduire la place disponible dans celui-ci.

Encore un autre objectif de l'invention est de fournir un tel système permettant une manipulation aisée des traverses, et ne nécessitant pas d'outil particulier.

L'invention à également pour objectif de fournir un tel système, permettant de conserver un aspect esthétique et une ergonomie acceptables dans tous les cas pour le véhicule.

Encore un objectif de l'invention est de fournir un tel système, qui soit simple et peu coûteux à mettre en oeuvre.

Ces objectifs, ainsi que d'autres qui apparaîtront plus clairement par la suite, sont atteints selon l'invention à l'aide d'un système de galerie pour véhicule automobile, comprenant deux barres longitudinales fixes comprenant chacune des moyens d'accrochage d'une traverse amovible pouvant prendre au moins deux positions :
- une position de repos, dans laquelle la traverse est parallèle à la barre fixe ; et
- une position de travail, dans laquelle la traverse est sensiblement perpendiculaires aux barres fixes,
les moyens d'accrochage comprenant au moins un logement dans lequel peut pénétrer une came solidaire d'une extrémité de la traverse, le logement coopérant avec la came de façon à empêcher la désolidarisation de la barre fixe et de la traverse, lorsque cette dernière est dans la position de repos, la traverse étant mobile en rotation par rapport à la barre fixe, selon son axe principal, entre la position de repos et une position d'accrochage/décrochage, sur une plage angulaire prédéterminée.

Il est ainsi particulièrement simple de solidariser les traverses aux barres, en position de repos, pour obtenir une solidarisation efficace entre ces deux pièces.

De façon avantageuse, dans la position de repos, la traverse et la barre fixe sont assemblées de façon à former un ensemble affleurant.

On conserve ainsi, lorsque les traverses ne sont pas utilisées, un bon aspect esthétique, et une bonne pénétration dans l'air, sans bruit aérodynamique.

Préférentiellement, le logement comprend une chambre dans laquelle la came peut se déplacer en rotation au moins sur la plage angulaire, et au moins un couloir d'accès à la chambre, à l'intérieur duquel la came peut circuler en translation uniquement dans la position d'accrochage/décrochage.

Selon un mode de réalisation particulier de l'invention, ledit couloir s'étend selon un axe formant un angle de l'ordre de 45° avec l'horizontale.

De façon avantageuse, la chambre est de section circulaire, et la came présente une longueur maximale légèrement inférieure au diamètre de la chambre et une largeur légèrement inférieure à la largeur du couloir.

Préférentiellement, chacune des traverses amovibles et/ou chacune des barres fixes comprennent des moyens de verrouillage au moins dans la position de repos.

Selon un mode de réalisation avantageux de l'invention, les moyens de verrouillage comprennent des moyens empêchant la rotation, et bloquant la traverse dans la position de repos.

Ainsi, les moyens de verrouillage peuvent notamment comprendre un doigt de blocage solidaire de ladite traverse amovible, et venant se loger dans ledit couloir, en position de verrouillage.

Selon un premier mode de réalisation particulier de l'invention, dans la position de travail, un pied de fixation d'une des traverses est solidarisé au logement.

Selon un second mode de réalisation particulier, dans la position de travail, la came est solidarisée à un second logement prévu à cet effet.

L'invention concerne également les véhicules automobiles comprenant un système de galerie tel que décrit ci-dessus.

D'autres caractéristiques et avantages de l'invention apparaîtront plus clairement à la lecture de la description suivante d'un mode de réalisation préférentiel de l'invention, donnée à titre de simple exemple illustratif et non limitatif, et des figures annexées parmi lesquelles :

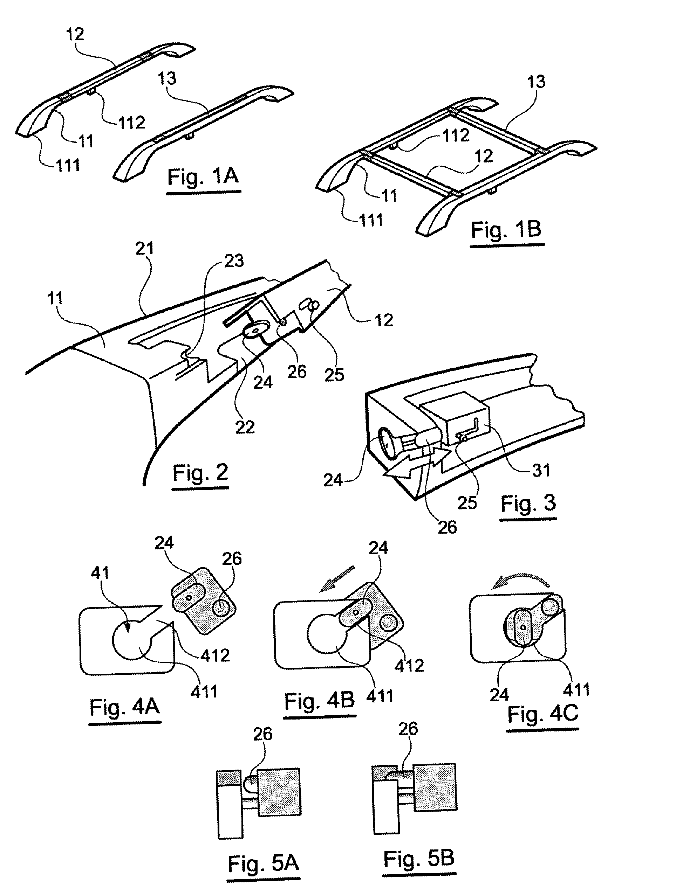

- les figures 1A et 1B illustrent un système de galerie selon l'invention, les traverses amovibles étant :
   - figure 1A : parallèles aux barres fixes, en position de repos ;
   - figure 1B : perpendiculaires aux barres fixes, en position de travail ;
- la figure 2 est une vue partielle d'une barre fixe et d'une traverse amovible, en cours d'assemblage ;
- la figure 3 illustre le principe du verrouillage de la traverse sur la barre fixe ;
- les figures 4A, 4B et 4C sont des vues en coupe simplifiées illustrant la solidarisation d'une traverse amovible à une barre fixe selon l'invention ;
- les figures 5A et 5B illustrent le verrouillage de la traverse amovible à la barre fixe.

L'invention repose donc sur une nouvelle approche des barres fixes, ou longerons, montées sur un véhicule automobile. En effet, au lieu de se présenter comme un tout monobloc figé, le longeron comprend deux éléments : une partie fixe et une partie amovible, qui peut se transformer en une traverse. Chaque longeron pouvant porter une de ces traverses, on dispose ainsi de deux traverses, qui permettent d'obtenir facilement un système de galerie.

Ce principe est illustré par les figures 1A et 1B.

Sur la figure 1A, le système de galerie est en position de repos. Il n'y a donc que deux longerons 11, s'étendant sensiblement parallèlement à l'axe principal du véhicule. L'aspect de ces longerons ressemble à celui des longerons classiques. Ils présentent à chacune de leurs extrémités des pieds 111 de solidarisation au pavillon du véhicule. Un pied central 112 peut être prévu pour renforcer la solidarisation des longerons.

Dans leur portion sensiblement linéaire, les deux longerons 11 portent les traverses amovibles 12 et 13. Ces dernières sont conçues de façon que, dans la position de la figure 1A, elles forment avec les longerons 11 un ensemble affleurant, permettant de conserver au véhicule une esthétique et une ergonomie de bonne qualité.

En position de travail (figure 1B), les traverses 12 et 13 ont été séparées de leurs longerons support respectifs, et montées transversalement, reliant les deux longerons 11 pour former une galerie. Les traverses sont alors perpendiculaires aux longerons (ou pratiquement perpendiculaires, si ces longerons ne sont pas parallèles entre eux).

Comme on le voit plus précisément sur la figure 2, qui illustre une portion du longeron et de la traverse amovible, le longeron 11 conserve également un bon aspect visuel lorsque la traverse est retirée, puisque le côté 21 tourné vers l'extérieur du véhicule reste inchangé.

Le longeron 11 comprend donc un espace 22, dans lequel vient prendre position la traverse 12. Aux deux extrémités de ce logement 22 sont prévus des éléments 23 de réception et de blocage de la traverse 12. Ceux-ci coopèrent avec une came 24 formée ou montée sur l'extrémité de la traverse.

On peut noter sur cette figure 2 que les extrémités du logement 22 et de la traverse 12 sont conçues de façon à obtenir un assemblage parfaitement affleurant, dans la position de repos.

La traverse 12 est également équipée de moyens de verrouillage, permettant de bloquer celle-ci en position de repos. Ces moyens apparaissent plus clairement sur la figure 3, qui laisse apparaître d'une part la came 24 dans son logement, en position de repos, et d'autre part le mécanisme 31 de verrouillage (normalement monté sur ou à l'intérieur de la barre mobile 12).

Les moyens de verrouillage comprennent un actionneur manuel 25, qui permet de contrôler le déplacement d'un doigt 26 logé à l'intérieur du mécanisme 31, et qui peut venir pénétrer dans un emplacement de verrouillage prévu sur le longeron 11. Un système à clé peut également être prévu.

L'actionneur 25 peut être déplacé dans une glissière présentant une portion de commande, parallèle au déplacement du doigt 26, et une portion de blocage perpendiculaire à ce déplacement.

Les figures 4A à 4C illustrent plus précisément le principe d'assemblage de la traverse mobile 12 avec le longeron 11. Ces trois vues sont des représentations simplifiées, en section, du longeron et de la traverse, au niveau de la came 24 et de son logement d'assemblage.

Le longeron comprend donc un logement 41 de réception de la came 24, comprenant deux parties principales :
- une chambre 411 de section circulaire ;
- un couloir 412 d'accès à la chambre 411.

Le couloir 412 est dimensionné de façon à ce que la came 24 puisse s'y introduire, lorsque la traverse 12 est inclinée de façon à ce que l'axe du couloir et l'axe de la came soient parallèles. Selon un mode de réalisation particulier, l'axe du couloir 412 forme sensiblement un angle de 45° avec l'horizontal.

La largeur de la came est choisie de façon à coopérer avec le couloir 412, avec un jeu léger.

La chambre 411 présente quant à elle un diamètre correspondant à la longueur maximale de la came 24, ce qui permet de guider la rotation de celle-ci une fois le couloir franchi.

L'assemblage se fait donc comme illustré sur les figures 4A à 4C :
- figure 4A : la traverse 12 est inclinée, dans une position d'accrochage/décrochage, de façon à aligner la came 24 et le couloir 412 ;
- figure 4B : la came 24 est introduite dans le couloir 412, puis guidée par coulissement jusqu'à l'intérieur de la chambre 411 ;
- figure 4C : enfin, la traverse 12 est basculée d'un huitième de tour, pour prendre la position de repos, assemblée avec le longeron. Dans cette position, la came empêche le retrait par coulissement.

Il reste alors à verrouiller l'ensemble, en empêchant une rotation dans le sens inverse.

Cela peut être obtenu aisément, comme illustré par les figures 5A et 5B, en faisant passer le doigt 26 d'une position non verrouillée (figure 5A), dans laquelle le doigt est en retrait par rapport au logement 41, à une position verrouillée (figure 5B) dans laquelle le doigt 26 pénètre à l'intérieur du couloir 412 (voir également figure 3).

## Revendications

1. Système de galerie pour véhicule automobile, comprenant deux barres longitudinales fixes (11),
chacune desdites barres fixes (11) comprenant des moyens d'accrochage d'une traverse amovible (12,13) pouvant prendre au moins deux positions :
- une position de repos, dans laquelle ladite traverse (12,13) est parallèle à ladite barre fixe (11) ; et
- une position de travail, dans laquelle ladite traverse (12,13) est sensiblement perpendiculaires auxdites barres fixes (11),
**caractérisé en ce que** lesdits moyens d'accrochage comprennent au moins un logement (41) dans lequel peut pénétrer une came (24) solidaire d'une extrémité de ladite traverse (12,13), ledit logement (41) coopérant avec ladite came (24) de façon à empêcher la désolidarisation de ladite barre fixe (11) et de ladite traverse (12,13), lorsque cette dernière est dans ladite position de repos,
ladite traverse (12,13) étant mobile en rotation par rapport à ladite barre fixe (11), selon son axe principal, entre ladite position de repos et une position d'accrochage/décrochage, sur une plage angulaire prédéterminée, de façon à ce que ladite came puisse pivoter dans ledit logement.

2. Système de galerie selon la revendication 1, **caractérisé en ce que**, dans ladite position de repos, ladite traverse (12,13) et ladite barre fixe (11) sont assemblées de façon à former un ensemble affleurant.

3. Système de galerie selon l'une quelconque des revendications 1 et 2, **caractérisé en ce que** ledit logement (41) comprend une chambre (411) dans laquelle ladite came (24) peut se déplacer en rotation au moins sur ladite plage angulaire, et au moins un couloir d'accès (412) à ladite chambre (411), à l'intérieur duquel ladite came (24) peut circuler en translation uniquement dans ladite position d'accrochage/décrochage.

4. Système de galerie selon la revendication 3, **caractérisé en ce que** ledit couloir (412) s'étend selon un axe formant un angle de l'ordre de 45° avec l'horizontale.

5. Système de galerie selon l'une quelconque des revendications 3 et 4, **caractérisé en ce que** ladite chambre (411) est de section circulaire, et **en ce que** ladite came (24) présente une longueur maximale légèrement inférieure au diamètre de ladite chambre (411) et une largeur légèrement inférieure à la largeur dudit couloir (412).

6. Système de galerie selon l'une quelconque des revendications 1 à 5, **caractérisé en ce que** chacune desdites traverses amovibles (12, 13) et/ou chacune desdites barres fixes (11) comprennent des moyens de verrouillage au moins dans ladite position de repos.

7. Système de galerie selon les revendications 3 et 6, **caractérisé en ce que** lesdits moyens de verrouillage comprennent des moyens empêchant ladite rotation.

8. Système de galerie selon la revendication 7, **caractérisé en ce que** lesdits moyens de verrouillage comprennent un doigt de blocage (26) solidaire de ladite traverse amovible (12,13), et venant se loger dans ledit couloir (412), en position de verrouillage.

9. Système de galerie selon l'une quelconque des revendications 1 à 8, **caractérisé en ce que**, dans ladite position de travail, un pied de fixation d'une desdites traverses (12, 13) est solidarisé audit logement (41).

10. Système de galerie selon l'une quelconque des revendications 1 à 8, **caractérisé en ce que**, dans ladite position de travail, ladite came (24) est solidarisée à un second logement prévu à cet effet.

11. Véhicule automobile comprenant un système de galerie comprenant deux barres longitudinales fixes (11),
chacune desdites barres fixes (11) comprenant des moyens d'accrochage d'une traverse amovible (12,13) pouvant prendre au moins deux positions :
- une position de repos, dans laquelle ladite traverse (12,13) est parallèle à ladite barre fixe (11) ; et
- une position de travail, dans laquelle ladite traverse (12,13) est sensiblement perpendiculaires auxdites barres fixes (11),
**caractérisé en ce que** lesdits moyens d'accrochage comprennent au moins un logement (41) dans lequel peut pénétrer une came (24) solidaire d'une extrémité de ladite traverse (12,13), ledit logement (41) étant conçu de façon à empêcher la désolidarisation de ladite barre fixe (11) et de ladite traverse (12,13), lorsque cette dernière est dans ladite position de repos,
ladite traverse (12,13) étant mobile en rotation par rapport à ladite barre fixe (11), selon son axe principal, entre ladite position de repos et une position d'accrochage/décrochage, sur une plage angulaire prédéterminée, de façon à ce que ladite came puisse pivoter dans ledit logement.

## Claims

1. Roof rack system for a motor vehicle, comprising two fixed longitudinal bars (11), each of the said fixed bars (11) comprising means for fastening a removable cross-piece (12, 13) which can assume at least two positions, i.e.:
- a rest position in which the said cross-piece (12, 13) is parallel to the said fixed bar (11); and
- a work position in which the said cross-piece (12-13) is substantially perpendicular to the said fixed bars (11),
**characterised in that** the said fastening means comprise at least one receptacle (41) in which there can penetrate a cam (24) which is integral with an end of the said cross-piece (12, 13), the said receptacle (41) co-operating with the said cam (24) such as to prevent detachment of the said fixed bar (11) and of the said cross-piece (12, 13) when the latter is in the said rest position, the said cross-piece (12, 13) being mobile in rotation relative to the said fixed bar (11), according to its main axis, between the said rest position and a position of fastening/unfastening, over a predetermined angular range, such that the said cam can pivot in the said receptacle.

2. Roof rack system according to claim 1, **characterised in that**, in the said rest position, the said cross-piece (12, 13) and the said fixed bar (11) are assembled such as to form a flush assembly.

3. Roof rack system according to claim 1 or claim 2, **characterised in that** the said receptacle (41) comprises a chamber (411) in which the said cam (24) can be displaced in rotation at least over the said angular range, and at least one passage (412) for access to the said chamber (411), inside which the said cam (24) can circulate in translation only in the said fastening/unfastening position.

4. Roof rack system according to claim 3, **characterised in that** the said passage (412) extends according to an axis which forms an angle of approximately 45° relative to the horizontal.

5. Roof rack system according to claim 3 or claim 4, **characterised in that** the said chamber (411) has a circular cross-section, and **in that** the said cam (24) has a maximal length which is slightly smaller than the diameter of the said chamber (411) and a width which is slightly smaller than the width of the said passage (412).

6. Roof rack system according to any one of claims 1 to 5, **characterised in that** each of the said removable cross-pieces (12, 13) and/or each of the said fixed bars (11) comprises means for locking at least in the said rest position.

7. Roof rack system according to claims 3 and 6, **characterised in that** the said locking means comprise means which prevent the said rotation.

8. Roof rack system according to claim 7, **characterised in that** the said locking means comprise a locking finger (26) which is integral with the said removable cross-piece (12, 13) and is accommodated in the said passage (412) in the locking position.

9. Roof rack system according to any one of claims 1 to 8, **characterised in that**, in the said work position, a foot for securing one of the said cross-pieces (12, 13) is rendered integral with the said receptacle (41).

10. Roof rack system according to any one of claims 1 to 8, **characterised in that**, in the said work position, the said cam (24) is rendered integral with a second receptacle which is provided for this purpose.

11. Motor vehicle comprising a roof rack system comprising two fixed longitudinal bars (11), each of the said fixed bars (11) comprising means for fastening a removable cross-piece (12, 13) which can assume at least two positions, i.e.:
- a rest position in which the said cross-piece (12, 13) is parallel to the said fixed bar (11); and
- a work position in which the said cross-piece (12-13) is substantially perpendicular to the said fixed bars (11),
**characterised in that** the said fastening means comprise at least one receptacle (41) in which there can penetrate a cam (24) which is integral with an end of the said cross-piece (12, 13), the said receptacle (41) being designed such as to prevent detachment of the said fixed bar (11) and of the said cross-piece (12, 13) when the latter is in the said rest position, the said cross-piece (12, 13) being mobile in rotation relative to the said fixed bar (11), according to its main axis, between the said rest position and a position of fastening/unfastening, over a predetermined angular range, such that the said cam can pivot in the said receptacle.

## Patentansprüche

1. Dachgepäckträgeranordnung für ein Fahrzeug mit zwei festen Längsholmen (11), wobei jeder dieser festen Holme (11) Mittel zum Einhängen eines abnehmbaren Querträgers (12, 13) umfasst, der mindestens zwei Positionen einnehmen kann:
- eine Ruheposition, in der dieser Querträger (12, 13) parallel zum festen Holm (11) verläuft, und
- eine Arbeitsposition, in der dieser Querträger (12,13) im Wesentlichen rechtwinklig zu den festen Holmen (11) verläuft,
**dadurch gekennzeichnet, dass** diese Einhängmittel mindestens eine Aufnahme (41) umfassen, in die ein fest mit einem Ende des Querträgers (12, 13) verbundener Nocken (24) eingeführt werden kann, wobei diese Aufnahme (41) so mit diesem Nocken (24) kooperiert, dass ein Loslösen des Querträgers (12, 13) vom festen Holm (11) in der Ruheposition verhindert wird,
wobei dieser Querträger (12, 13) in Bezug auf den festen Holm (11) um dessen Hauptachse zwischen der Ruheposition und einer Einhäng-/Aushängposition in einem vorgegebenen Winkelbereich drehbeweglich ist, so dass der Nocken in der Aufnahme schwenken kann.

2. Dachgepäckträgeranordnung nach Anspruch 1,
**dadurch gekennzeichnet, dass** der Querträger (12, 13) und der feste Holm (11) in der Ruheposition so verbunden sind, dass sie eine bündig abschließende Einheit bilden.

3. Dachgepäckträgeranordnung nach einem der Ansprüche 1 und 2,
**dadurch gekennzeichnet, dass** die Aufnahme (41) einen Raum (411) umfasst, in dem sich der Nocken (24) zumindest in dem genannten Winkelbereich drehen kann, und mindestens einen Zugangskanal (412) zu diesem Raum (411), in dem sich der Nocken (24) nur in dieser Einhäng-/Aushängposition längs bewegen kann.

4. Dachgepäckträgeranordnung nach Anspruch 3,
**dadurch gekennzeichnet, dass** dieser Kanal (412) in einer Achse verläuft, die einen Winkel von ça 45° zur Horizontalen bildet.

5. Dachgepäckträgeranordnung nach einem der Ansprüche 3 und 4,
**dadurch gekennzeichnet, dass** der Raum (411) einen kreisförmigen Querschnitt aufweist und dass der Nocken (24) eine maximale Länge aufweist, die etwas geringer als der Durchmesser des Raums (411) ist, und eine Breite, die etwas geringer als die Breite des Kanals ist (412).

6. Dachgepäckträgeranordnung nach einem der Ansprüche 1 bis 5,
**dadurch gekennzeichnet, dass** jeder abnehmbare Querträger (12, 13) und/oder jeder feste Holm (11) zumindest in der Ruheposition Verriegelungsmittel umfasst.

7. Dachgepäckträgeranordnung nach den Ansprüchen 3 und 6,
**dadurch gekennzeichnet, dass** diese Verriegelungsmittel Mittel umfassen, die eine Drehung verhindern.

8. Dachgepäckträgeranordnung nach Anspruch 7,
**dadurch gekennzeichnet, dass** diese Verriegelungsmittel einen mit dem abnehmbaren Querträger (12, 13) fest verbundenen Arretierungsfinger (26) umfassen, der in der Ruheposition in den Kanal (412) greift.

9. Dachgepäckträgeranordnung nach einem der Ansprüche 1 bis 8,
**dadurch gekennzeichnet, dass** in der Arbeitsposition ein Fuß zur Befestigung eines der Querträger (12, 13) fest mit der Aufnahme (41) verbunden ist.

10. Dachgepäckträgeranordnung nach einem der Ansprüche 1 bis 8,
**dadurch gekennzeichnet, dass** der Nocken (24) in der Arbeitsposition fest mit einer zweiten, hierzu vorgesehenen Aufnahme verbunden ist.

11. Fahrzeug mit einer Dachgepäckträgeranordnung, die zwei feste Längsholme (11) umfasst,
wobei jeder dieser festen Holme (11) Mittel zum Einhängen eines abnehmbaren Querträgers (12, 13) umfasst, der mindestens zwei Positionen einnehmen kann:
- eine Ruheposition, in der dieser Querträger (12, 13) parallel zu diesem festen Holm (11) verläuft, und
- eine Arbeitsposition, in der dieser Querträger (12, 13) im Wesentlichen rechtwinklig zu den festen Holmen (11) verläuft,
**dadurch gekennzeichnet, dass** diese Einhängmittel mindestens eine Aufnahme (41) umfassen, in die ein mit einem Ende des Querträgers (12, 13) fest verbundener Nocken (24) eindringen kann, der so gestaltet ist, dass ein Loslösen des Querträgers (12, 13) vom festen Holm (11) in der Ruheposition verhindert wird,
wobei dieser Querträger (12, 13) in Bezug auf den festen Holm (11) um dessen Hauptachse zwischen der Ruheposition und einer Einhäng-/Aushängposition in einem vorgegebenen Winkelbereich drehbeweglich ist, so dass der Nocken in der Aufnahme schwenken kann.
